# EUROPEAN PATENT APPLICATION

(11) **EP 3 349 104 A1**
(43) Date of publication of application: **18.07.2018**
(21) Application number: 17151295.7
(22) Date of filing: 12.01.2017
(51) Int. Cl.: G06F 3/0481, G06F 3/01, G06F 3/0346, A63F 13/211, A63F 13/30, G02B 27/01

(54) **VIRTUAL REALITY ARCADE**

(71) Applicant: Virva VR Oy, 34140 Mutala (FI)
(72) Inventor: Koivisto, Kari Lauri Tapani, 34140 Mutala (FI); Hyvönen, Timo Juhani, 33430 Vuorentausta (FI)
(74) Representative: Koivisto, Harri Kristian

(57) **Abstract**

An apparatus, a system and a method for a virtual reality arcade are disclosed. The virtual reality arcade has a back-end server configured to support multiple front-end servers, wherein the front-end server is configured to run virtual reality equipment in its dedicated space. The front-end servers are configured to display a user interface at the virtual reality environment for selecting an application program and a control layer for controlling the virtual reality session at the arcade. The application program selection may be personalised for the user, for example age ratings or personal preferences may be taken into account. The control layer provides a visual information that the user may revert to while using the application program or while selecting the next application program to be used.

## Description

### BACKGROUND

One example of virtual reality uses computer technology to create an immersive three-dimensional environment. A user may experience the three-dimensional environment via a head-mounted display, wherein the view follows the user's movements. The user may look around in the environment, move in it or interact with features or items.

A virtual reality arcade offers multiple spaces for a virtual reality equipment, wherein the user may book or rent the space and use the equipment for a limited time period. The virtual reality arcade solves the problem of the user investing to the equipment; and setting up a suitable space for safe use of virtual reality, wherein the real world objects could hinder user's movements. Different users may have different needs or requirements, for example content ratings based on user's age. An arcade management system must be able to conform to different needs, while enabling multiple application programs for the users of the virtual reality equipment.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

An apparatus, a system and a method for a virtual reality arcade are disclosed. The virtual reality arcade has a back-end server configured to support multiple front-end servers, wherein the front-end server is configured to run virtual reality equipment in its dedicated space. The front-end servers are configured to display a user interface at the virtual reality environment for selecting an application program and a control layer for controlling the virtual reality session at the arcade. The application program selection may be personalised for the user, for example age ratings or personal preferences may be taken into account. The control layer provides a visual information that the user may revert to while using the application program or while selecting the next application program to be used.

The system architecture allows distributing application programs requiring more processor time to front-end servers, while enabling centralized visual feedback during the virtual reality session and application program control to the user. All front-end servers may contain similar set of application programs, as the back-end server provides the information for personalizing the user interface. The user may be informed of the virtual reality session details, such as remaining session or achievements made during the gameplay. In one example the user may display the information with a simple gesture during the gameplay. The virtual reality session may be personalized according to a session information that the front-end server receives from the back-end server.

Many of the attendant features will be more readily appreciated as they become better understood by reference to the following detailed description considered in connection with the accompanying drawings. The embodiments described below are not limited to implementations which solve any or all the disadvantages of virtual reality arcades.

### BRIEF DESCRIPTION OF THE DRAWINGS

The present description will be better understood from the following detailed description read in light of the accompanying drawings, wherein
FIG. 1 illustrates schematically one example of a system for managing or controlling multiple virtual reality sessions;
FIG. 2 illustrates schematically steps of a method for the virtual reality session;
FIG. 3a illustrates schematically one step of a gesture for displaying information related to the virtual reality session;
FIG. 3b illustrates schematically another step of a gesture for displaying information related to the virtual reality session;
FIG. 3c illustrates schematically a further step of a gesture for displaying information related to the virtual reality session and/or controlling the virtual reality session.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

Although the present examples are described and illustrated herein as being implemented in a virtual reality arcade, the apparatus, the system or the method described are provided as an example and not a limitation. As those skilled in the art will appreciate, the present examples are suitable for application in a variety of different types of distributed application program managements having three-dimensional virtual reality environment.

One example of a virtual reality arcade is a facility providing several physical booths for using virtual reality system. One physical booth typically accommodates one user. During a virtual reality session the user may select from multiple application programs configured for virtual reality experience, such as games or different visual attractions. The user does not have to invest to the virtual reality equipment or to the space required for safely experiencing the virtual reality environment.

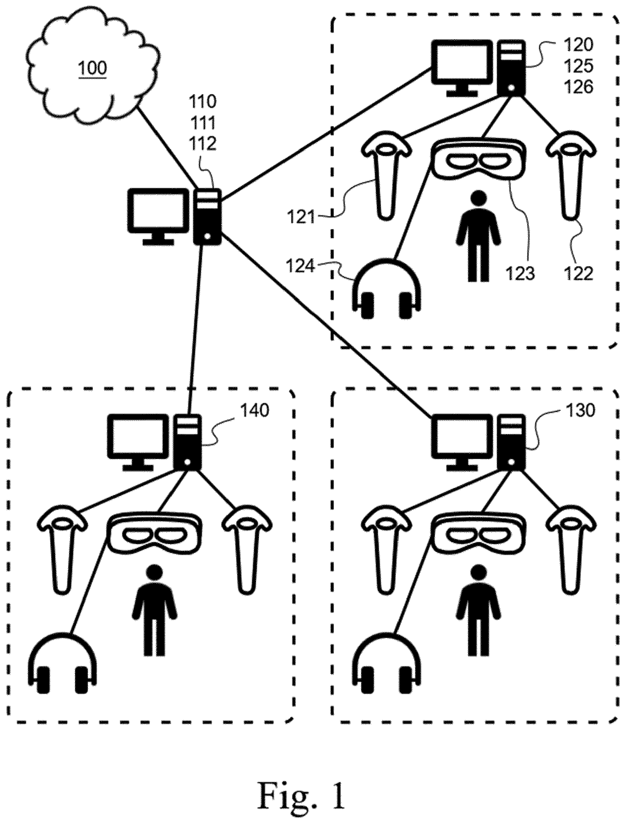

FIG. 1 illustrates schematically one example of the virtual reality arcade, having a back-end server 110 configured to set up a virtual reality session. In one embodiment the back-end server 110 comprises at least one processor 111 and a memory 112 storing instructions that, when executed, cause the back-end server to perform functions for running an operation system and/or application programs for the virtual reality session. The back-end server may be connected to a cloud computing environment 100, wherein at least portion of the functionality may be performed. In one embodiment the back-end server 110 resides in the cloud computing environment 100. The back-end server 110 is configured to receive user-related information from the cloud computing environment 100. In one embodiment the back-end server is connected to Internet 100 for receiving information from various sources, such as a social media service or a booking system. In one example the user may enter his/her personal information or requirements for the virtual reality session via the cloud computing environment 100. In one embodiment the back-end server 110 is configured to modify the virtual reality session according to the user's personal information or requirements. For example, the user may register as young person, wherein age restrictions are applied to the application program selection.

The personal information of one example of attributes relating to the user or to the virtual reality session. Attributes may be selected from a group consisting: user name, duration of the session, multiplay or solo play, maximum number of players in a multiplayer session, co-operative games, game save information, replay feature, age restriction, visual effect, possibility to cause nausea or migraine and physical disability of the user. The group is just one example of implementing personalized information to the virtual reality session - additional attributes may be included.

Multiple front-end servers 120, 130, 140 are connected to the back-end server 110, each front-end server 120, 130, 140 comprising at least one processor 125 and a memory 126 storing instructions that, when executed, cause at least one front-end server 120, 130, 140 to to perform functions for running an operation system and/or application programs for the virtual reality session. The front-end server 120, 130, 140 is one example of an apparatus configured to run the virtual reality environment. In one embodiment at least one front-end server 120, 130, 140 is configured to run the virtual reality session. The virtual reality session comprises a period of time, during which the user may use the front-end server 120, 130, 140 and at least one application program configured for providing virtual reality on a head-mounted display 123. The virtual reality equipment connected to the front-end server 120, 130, 140 may comprise a first hand-operated controller 121, a second hand-operated controller 122 and the head-mounted display 123 configured to provide a three-dimensional virtual reality view to the user. In one embodiment the front-end server 120, 130, 140 is connected to a position detection device configured to detect a position and a direction of the first hand-operated controller 121, the second hand-operated controller 122 and the head-mounted display 123.

The front-end server 120, 130, 140, as being one example of an apparatus, comprises an interface for receiving data from another apparatus, for example a wired connection or a wireless connection, wherein the data is transmitted digitally between apparatuses, such as between the back-end server 110 and the front-end server 120. In one embodiment the front-end server 120, 130, 140 provides a virtual reality view of the first hand-operated controller 121 and the second hand-operated controller 122 to the user. The user may see hand-operated controllers 121, 122 as virtual hands or virtual controllers and manipulate the virtual reality environment with them. The front-end server 120, 130, 140 provides a user interface for displaying multiple application programs configured for providing virtual reality on the head-mounted display, wherein the user may select the application program from within the virtual reality environment. In one embodiment the virtual reality equipment comprises headphones 124 or speakers for providing auditory response during the virtual reality session. In one embodiment the multiple front-end servers 120, 130, 140 are configured to run on the same apparatus as the back-end server 110, sharing the processor or the memory.

The back-end server 110 is configured, as a response to receiving the user-related information, to define a session information related to the virtual reality session. The session information may consist any attributes that the user has submitted to the back-end server 100 or, alternatively, the operator of the back-end server 110 may enter at least some the attributes. The session information comprises information defining the virtual reality session, such as the session duration or age restrictions. The back-end server 110 sends the session information to the front-end server, in this example to server 120. The front-end server 120 is configured to receive the session information. In one embodiment the session information is sent to one assigned front-end server 120. In one embodiment the session information is sent to all front-end servers 120, 130, 140, wherein the information relating to the particular user and the virtual reality session may be activated after authenticating the user.

The front-end server 120, 130, 140 provides a control layer for controlling multiple application programs during the virtual reality session. The session information is used to control the virtual reality session, for example by filtering application programs that are suitable to age restrictions. The head-mounted display 123 is configured to display the session information related to a virtual reality session. The virtual reality session may comprise a virtual reality lounge mode, wherein the user may select between multiple application programs. Alternatively, the user may experience the application program mode. In one embodiment the head-mounted display displays the remaining session time, instructions or for example warnings that some application programs may cause nausea, if the user has indicated being sensitive to moving virtual reality environment. In one embodiment the session information is displayed during running the application program. In one embodiment the session information is displayed during selecting the application program out of multiple alternatives.

In one embodiment the front-end server 120, 130, 140 is configured to select a subset of multiple application programs according to the session information. The subset may be selected by comparing the session information to the predefined information of each application program, such as the age restriction that is one attribute assigned to games, and filtering the full list of application programs. Various attributes may be defined to the back-end system 110 manually, for example after detecting suitability of one application program to one demographic group. The subset of multiple application programs is displayed to the user via the head-mounted display 123 during the virtual reality session.

In one embodiment the front-end server 120, 130, 140 is configured to store information related to the user and the virtual reality session to the memory 122. Examples of such information are game achievements or time used for each application programs. In one embodiment the front-end server 120, 130, 140 detects the user's performance level on the application program - if the user passes a single game easily, the system may store the information and recommend to the user more challenging application programs for the next virtual reality session. Alternatively, if the user is stuck to a single obstacle during a gameplay, the system may recommend easier application programs for the next session. The front-end server 120, 130, 140 is configured to send the stored information to the back-end server 110, wherein it may be used for creating the next session information for the same user or another user having similar attributes.

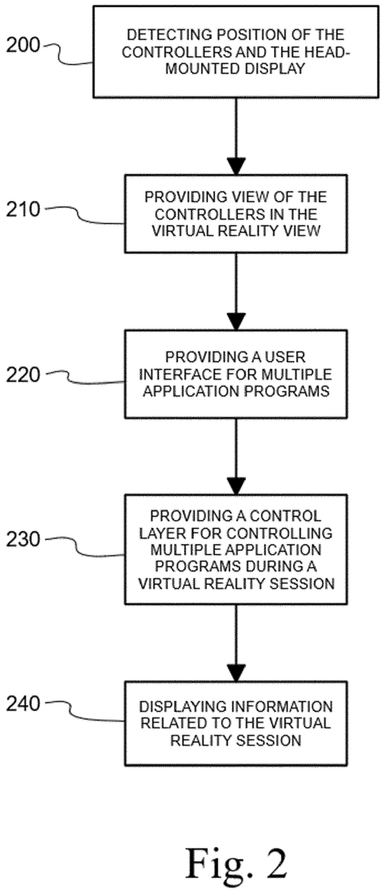

FIG. 2 illustrates exemplary steps of a method that may be used within the apparatus or the system disclosed hereinbefore. In step 200 the virtual reality equipment comprises a position detection device detecting a position and a direction of the first hand-operated controller 121, the second hand-operated controller 122 and the head-mounted display 123. In the immersive, three-dimensional virtual reality the objects of reality appear to be moving in similar manner or according to the user's guidance. Position detectors detect the objects in a space that is transformed into virtual reality. In step 210 the controllers are replicated into the virtual reality. The user may see several application programs inside the virtual reality, wherein he/she may select one application program, step 220. The selection view may be regarded as a virtual lounge having multiple doors or portals to the application programs.

In step 230 the front-end server 120, 130, 140 is providing a control layer for controlling multiple application programs during a virtual reality session. The control means may comprise filtering the application program selection or providing warnings, personalized information or personalizing the virtual environment to match the user's needs or requirements. In step 240 information related to the virtual reality session is displayed on the head-mounted display 123. The information may comprise game achievements, messages from other sessions in a multiplayer environment or other social messages during solo play, such as user chat between booths.

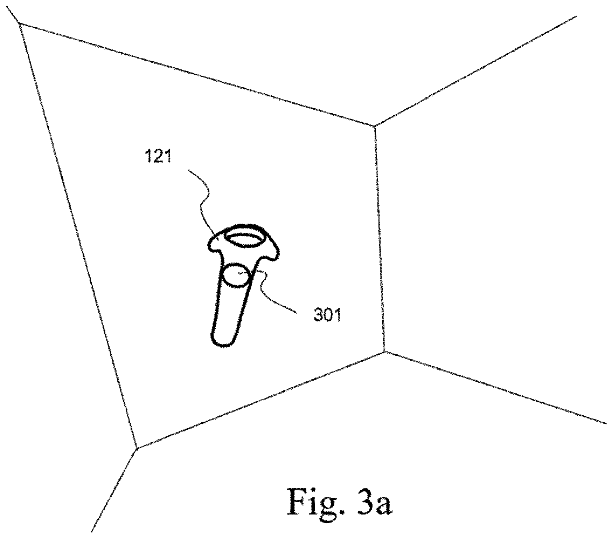

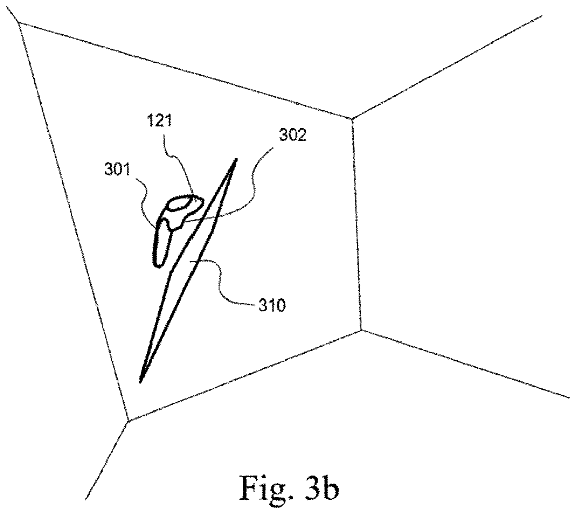

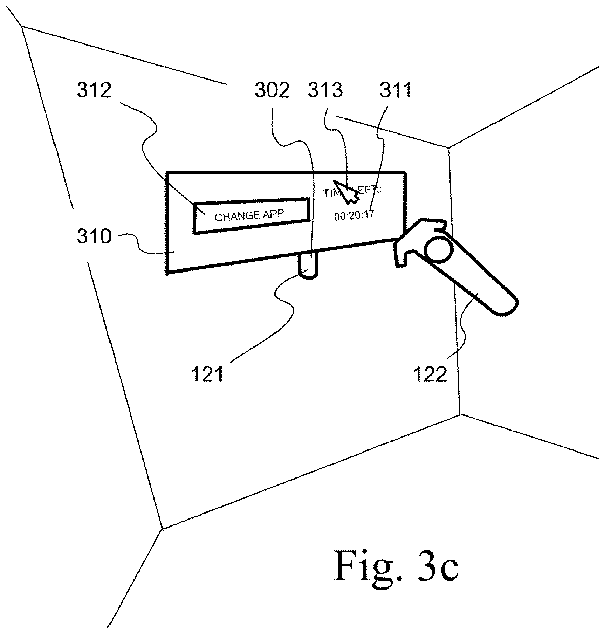

FIG. 3a, FIG. 3b and FIG. 3c illustrate schematically a gesture for displaying information related to the virtual reality session. In FIG. 3a the first hand-operated controller 121 is shown on the virtual reality environment. In this example a visual appearance of the hand-operated controller 121 resembles the real world object, but different visual appearances may be used. The geometry between the hand-operated controllers 121, 122 in the virtual reality corresponds to the geometry of the real world objects, thus enabling immersive user experience. Seen thru the head-mounted display 123, the virtual first hand-operated controller 121 has an upper side 301 pointed towards the head-mounted display 123, corresponding to the upper side of the real first hand-operated controller 121 being in similar position. FIG. 3b illustrates a transition step, wherein the lower side 302 of the first hand-operated controller 121 is turning towards the head-mounted display 123. Similar transition occurs in real world simultaneously. As the position detector detects that the first hand-operated controller 121 is in a position having the lower side 302 towards the head-mounted display 123, an information object 310 appears on the virtual reality view of the head-mounted display 123. When the lower side 302 is turned away from the head-mounted display 123, the information object 310 disappears.

FIG. 3c illustrates a situation, wherein the lower side 302 of the first hand-operated controller 121 is directed towards he head-mounted display 123. The information object 310 is visible with the information 311 related to the virtual reality session. In this example the information 311 is the remaining time of the virtual reality session. The user may view the information object 310 or the information 311 before entering any application program or during running the application program. In one embodiment the first hand-operated controller 121 is configured to position on the user's hand in a manner where the lower side 302 resembles the palm side of the hand. The gesture may be realized as the user looking at the palm side of his/her hand. The information object 310 provided may be glanced anytime during the arcade virtual reality session. The apparatus, for example the front-end server 120, 130, 140 may provide an application programming interface allowing additional functions, such as an overlay to provide the functionality of the information object 310 or the information 311. The information presented in the information object may be context sensitive, corresponding to the application program or situation in the virtual reality.

In one embodiment the information object 310 comprises a graphical, interactive user interface object 312, 313 with which the user interacts in order to control the virtual reality session. In one embodiment the user may control the object 312, 313 with the second hand-operated controller 122, wherein the second hand-operated controller 122 is a pointer with which the user interacts to move the cursor 313 at the information object 310. In this example, the top end of the second hand-operated controller 122 is the pointer, activating the cursor, for example an arrowhead 313 onto the information object 310, when pointing towards the information object 310 in the virtual reality environment. The user may control the virtual reality session, in this example by selecting a soft button 312 from the information object 310 to change the application program.

The user may navigate within multiple application programs without the need of removing the head-mounted display 123. As the virtual reality lounge may be personalized according to the user, the user may experience only safe and suitable application programs. The back-end server 110 may act as a centralized database for the front-end servers 120, 130, 140, comprising attributes such as different languages. The back-end server 110 is an easy solution for the arcade operator. Centralized attributes allow highly personalized arcade experience. In one embodiment the user has a smartphone or tablet app for providing personal information or reviewing previous virtual reality session highlights. The virtual reality lounge may be modified according to the user, for example children see different lounge than adult users. In one embodiment the back-end server 110 monitors the uptimes and usability parameters of each front-end server 120, 130, 140. In one embodiment the user may pause the game or application program and return to the same position in a new session, wherein the front-end server 120, 130, 140 sends the information to the back-end server 110 to be stored.

An example discloses an apparatus, comprising: a first hand-operated controller; a second hand-operated controller; a head-mounted display configured to provide a three-dimensional virtual reality view to a user; a position detection device configured to detect a position and a direction of the first hand-operated controller, the second hand-operated controller and the head-mounted display; an interface for receiving data from another apparatus; at least one processor and a memory storing instructions that, when executed, cause the apparatus to: provide a virtual reality view of the first hand-operated controller and the second hand-operated controller to the user; provide a user interface for displaying multiple application programs configured for providing virtual reality on the head-mounted display. The at least one processor and the memory storing instructions that, when executed, cause the apparatus to: provide a control layer for controlling multiple application programs during a virtual reality session; and display on the head-mounted display an information related to a virtual reality session. In one embodiment the apparatus comprises the first hand-operated controller having an upper side and a lower side; the virtual reality view of the first hand-operated controller having an upper side and a lower side; wherein the at least one processor and the memory storing instructions that, when executed, cause the apparatus to: detect the first hand-operated controller having a lower side towards the head-mounted display; and display the information related to the virtual reality session on an information object positioned on the lower side of the virtual reality view of the first hand-operated controller. In one embodiment the information object comprises a graphical, interactive user interface object with which the user interacts in order to control the virtual reality session. In one embodiment the second hand-operated controller is a pointer with which the user interacts to point at the information object. In one embodiment the apparatus comprises the at least one processor and the memory storing instructions that, when executed, cause the apparatus to: receive from a control system a session information related to the user and the virtual reality session; select a subset of multiple application programs according to the session information related to the user and the virtual reality session; and display the subset of multiple application programs to the user during the virtual reality session. In one embodiment the apparatus comprises the at least one processor and the memory storing instructions that, when executed, cause the apparatus to: store information related to the user and the virtual reality session; and send the information to a session control system.

Alternatively, or in addition, a system is disclosed, comprising: a back-end server configured to set up a virtual reality session; multiple front-end servers connected to the back-end server, comprising at least one processor and a memory storing instructions that, when executed, cause at least one front-end server to run a virtual reality session having multiple application programs configured for providing virtual reality on a head-mounted display. The back-end server comprises at least one processor and a memory storing instructions that, when executed, cause the back-end server to: receive user-related information; as a response to the user-related information, define a session information related to the virtual reality session; and send the session information to at least one front-end server. The front-end server comprises at least one processor and the memory storing instructions that, when executed, cause at least one front-end server to: receive the session information; provide a control layer for controlling multiple application programs during the virtual reality session according to the session information; and display on a head-mounted display an information related to a virtual reality session. In one embodiment the at least one processor and the memory storing instructions that, when executed, cause the front-end server to: select a subset of multiple application programs according to the session information; and display the subset of multiple application programs to the user during the virtual reality session. In one embodiment the at least one processor and the memory storing instructions that, when executed, cause the front-end server to: store information related to the user and the virtual reality session; and send the information to the back-end server.

Alternatively, or in addition, a method is disclosed, comprising: a first hand-operated controller; a second hand-operated controller; a head-mounted display providing a three-dimensional virtual reality view to a user; a position detection device detecting a position and a direction of the first hand-operated controller, the second hand-operated controller and the head-mounted display; an interface for receiving data; at least one processor and a memory storing instructions that, when executed, causing to: providing a virtual reality view of the first hand-operated controller and the second hand-operated controller to the user; providing a user interface for displaying multiple application programs configured for providing virtual reality on the head-mounted display, providing a control layer for controlling multiple application programs during a virtual reality session; and displaying on the head-mounted display an information related to a virtual reality session. In one embodiment the method comprises the first hand-operated controller having an upper side and a lower side; the virtual reality view of the first hand-operated controller having an upper side and a lower side; the at least one processor and the memory storing instructions that, when executed, causing to: detecting the first hand-operated controller having a lower side towards the head-mounted display; and displaying the information related to the virtual reality session on an information object positioned on the lower side of the virtual reality view of the first hand-operated controller. In one embodiment the information object comprises a graphical, interactive user interface object with which the user interacts in order to control the virtual reality session. In one embodiment the second hand-operated controller is a pointer with which the user interacts to point at the information object. In one embodiment the method comprises the at least one processor and the memory storing instructions that, when executed, causing to: receiving from a control system a session information related to the user and the virtual reality session; selecting a subset of multiple application programs according to the session information related to the user and the virtual reality session; and displaying the subset of multiple application programs to the user during the virtual reality session. In one embodiment the method comprises the at least one processor and the memory storing instructions that, when executed, causing to: storing information related to the user and the virtual reality session; and sending the information to a session control system.

Alternatively, or in addition, the controlling functionality described herein can be performed, at least in part, by one or more hardware components or hardware logic components. An example of the virtual arcade control system described hereinbefore is a computing-based device comprising one or more processors which may be microprocessors, controllers or any other suitable type of processors for processing computer executable instructions to control the operation of the device in order to control one or more sensors, receive sensor data and use the sensor data. The computer executable instructions may be provided using any computer-readable media that is accessible by computing based device. Computer-readable media may include, for example, computer storage media such as memory and communications media. Computer storage media, such as memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device it will be appreciated that the storage may be distributed or located remotely and accessed via a network or other communication link, for example by using communication interface.

The apparatus or the device may comprise an input/output controller arranged to output display information to a display device which may be separate from or integral to the apparatus or device. The input/output controller is also arranged to receive and process input from one or more devices, such as a user input device (e.g. a mouse, keyboard, camera, microphone or other sensor).

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

Any range or device value given herein may be extended or altered without losing the effect sought.

Although at least portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. An apparatus, comprising:
a first hand-operated controller (121);
a second hand-operated controller (122);
a head-mounted display (123) configured to provide a three-dimensional virtual reality view to a user;
a position detection device configured to detect a position and a direction of the first hand-operated controller (121), the second hand-operated controller (122) and the head-mounted display (123);
an interface for receiving data from another apparatus;
at least one processor (125) and a memory (126) storing instructions that, when executed, cause the apparatus to:
provide a virtual reality view of the first hand-operated controller (121) and the second hand-operated controller (122) to the user;
provide a user interface for displaying multiple application programs configured for providing virtual reality on the head-mounted display (123);
**characterized in that** the at least one processor (125) and the memory (126) storing instructions that, when executed, cause the apparatus to:
provide a control layer for controlling multiple application programs during a virtual reality session; and
display on the head-mounted display (123) an information (311) related to a virtual reality session.

2. An apparatus according to claim 1, **characterized by**:
the first hand-operated controller (121) having an upper side (301) and a lower side (302);
the virtual reality view of the first hand-operated controller (121) having an upper side (301) and a lower side (302);
the at least one processor (125) and the memory (126) storing instructions that, when executed, cause the apparatus to:
detect the first hand-operated controller (121) having a lower side (302) towards the head-mounted display (123); and
display the information (311) related to the virtual reality session on an information object (310) positioned on the lower side (302) of the virtual reality view of the first hand-operated controller (121).

3. An apparatus according to claim 2, **characterized by** the information object (310) comprising a graphical, interactive user interface object (313) with which the user interacts in order to control the virtual reality session.

4. An apparatus according to claim 3, **characterized in that** the second hand-operated controller (122) is a pointer with which the user interacts to point at the information object (310).

5. An apparatus according to any of the claims 1 to 4, **characterized in that** the at least one processor (125) and the memory (126) storing instructions that, when executed, cause the apparatus to:
receive from a control system a session information related to the user and the virtual reality session;
select a subset of multiple application programs according to the session information related to the user and the virtual reality session; and
display the subset of multiple application programs to the user during the virtual reality session.

6. An apparatus according to any of the claims 1 to 5, **characterized in that** the at least one processor (125) and the memory (126) storing instructions that, when executed, cause the apparatus to:
store information related to the user and the virtual reality session; and
send the information to a session control system.

7. A system, comprising:
a back-end server configured to set up a virtual reality session;
multiple front-end servers connected to the back-end server, comprising at least one processor (125) and a memory (126) storing instructions that, when executed, cause at least one front-end server to run a virtual reality session having multiple application programs configured for providing virtual reality on a head-mounted display (123);
**characterized in that** the back-end server comprises at least one processor (111) and a memory (112) storing instructions that, when executed, cause the back-end server to:
receive user-related information;
as a response to the user-related information, define a session information related to the virtual reality session; and
send the session information to at least one front-end server; wherein
the front-end server comprises at least one processor (125) and the memory (126) storing instructions that, when executed, cause at least one front-end server to:
receive the session information;
provide a control layer for controlling multiple application programs during the virtual reality session according to the session information;
and
display on a head-mounted display (123) an information (311) related to a virtual reality session.

8. A system according to claim 7, **characterized in that** the at least one processor (125) and the memory (126) storing instructions that, when executed, cause the front-end server to:
select a subset of multiple application programs according to the session information; and
display the subset of multiple application programs to the user during the virtual reality session.

9. A system according to claim 7 or 8, **characterized in that** the at least one processor (125) and the memory (126) storing instructions that, when executed, cause the front-end server to:
store information related to the user and the virtual reality session; and
send the information to the back-end server.

10. A method, comprising:
a first hand-operated controller (121);
a second hand-operated controller (122);
a head-mounted display (123) providing a three-dimensional virtual reality view to a user;
a position detection device detecting a position and a direction of the first hand-operated controller (121), the second hand-operated controller (122) and the head-mounted display (123);
an interface for receiving data;
at least one processor (125) and a memory (126) storing instructions that, when executed, causing to:
providing a virtual reality view of the first hand-operated controller (121) and the second hand-operated controller (122) to the user;
providing a user interface for displaying multiple application programs configured for providing virtual reality on the head-mounted display (123);
**characterized by**:
providing a control layer for controlling multiple application programs during a virtual reality session; and
displaying on the head-mounted display (123) an information (311) related to a virtual reality session.

11. A method according to claim 10, **characterized by**:
the first hand-operated controller (121) having an upper side (301) and a lower side (302);
the virtual reality view of the first hand-operated controller (121) having an upper (301) side and a lower side (302);
the at least one processor (125) and the memory (126) storing instructions that, when executed, causing to:
detecting the first hand-operated controller (121) having a lower side (302) towards the head-mounted display (123); and
displaying the (311) related to the virtual reality session on an information object (310) positioned on the lower side (302) of the virtual reality view of the first hand-operated controller (121).

12. A method according to claim 11, **characterized by** the information object (310) comprising a graphical, interactive user interface object (313) with which the user interacts in order to control the virtual reality session.

13. A method according to claim 12, **characterized in that** the second hand-operated controller (122) is a pointer with which the user interacts to point at the information object (310).

14. A method according to any of the claims 10 to 13, **characterized**
**in that** the at least one processor (125) and the memory (126) storing instructions that, when executed, causing to:
receiving from a control system a session information related to the user and the virtual reality session;
selecting a subset of multiple application programs according to the session information related to the user and the virtual reality session; and
displaying the subset of multiple application programs to the user during the virtual reality session.

15. A method according to any of the claims 10 to 14, **characterized**
**in that** the at least one processor (125) and the memory (126) storing instructions that, when executed, causing to:
storing information related to the user and the virtual reality session; and
sending the information to a session control system.
